# EUROPEAN PATENT SPECIFICATION

(11) **EP 4 138 169 B1**
(45) Date of publication and mention of the grant of the patent: **10.09.2025**
(21) Application number: 22781403.5
(22) Date of filing: 25.02.2022
(51) Int. Cl.: H01M 4/136, H01M 4/38, H01M 4/62, H01M 10/052, H01M 10/0567, H01M 10/0569, H01M 4/02, H01M 10/0568

(54) **LITHIUM SECONDARY BATTERY**
LITHIUMSEKUNDÄRBATTERIE
BATTERIE SECONDAIRE AU LITHIUM

(30) Priority: 31.03.2021 KR 20210042148; 24.02.2022 KR 20220024018
(43) Date of publication of application: 22.02.2023
(73) Proprietor: LG Energy Solution, Ltd., Seoul 07335 (KR)
(72) Inventor: AHN, Jihoon, Daejeon 34122 (KR); KIM, Taek Gyoung, Daejeon 34122 (KR); KIM, Bong Soo, Daejeon 34122 (KR)
(74) Representative: Goddar, Heinz J.
(86) International application number: PCT/KR2022/002757
(87) International publication number: WO 2022/211282

(56) References cited:
- WO-A1-2019/078965
- CN-A- 111 640 939
- KR-A- 20160 005 897
- KR-A- 20170 121 047
- KR-A- 20180 057 437
- KR-A- 20190 116 534
- US-A1- 2017 256 798
- M.L. GORDIN ET AL: "Bis(2,2,2-trifluoroethyl) Ether As an Electrolyte Co-solvent for Mitigating Self-Discharge in Lithium-Sulfur Batteries", vol. 6, no. 11, 15 May 2014 (2014-05-15), US, pages 8006 - 8010, XP055869199, ISSN: 1944-8244, Retrieved from the Internet <URL:https://pubs.acs.org/doi/pdf/10.1021/am501665s> DOI: 10.1021/am501665s
- NANDA SANJAY, BHARGAV AMRUTH, MANTHIRAM ARUMUGAM: "Anode-free, Lean-Electrolyte Lithium-Sulfur Batteries Enabled by Tellurium-Stabilized Lithium Deposition", JOULE, CELL PRESS, vol. 4, no. 5, 1 May 2020 (2020-05-01), pages 1121 - 1135, XP055972546, ISSN: 2542-4351, DOI: 10.1016/j.joule.2020.03.020

## Description

### [Technical Field]

The present application claims the benefit of priorities based on Korean Patent Application No. 10-2021-0042148 filed on March 31, 2021, and Korean Patent Application No. 10-2022-0024018 filed on February 24, 2022.

The present invention relates to a lithium secondary battery, and more particularly, to a lithium secondary battery comprising tellurium as an additive for the positive electrode and bis(2,2,2-trifluoroethyl)ether as an additive for the electrolyte solution.

### [Background Art]

Recently, as the miniaturization and weight reduction of electronic products, electronic devices, communication devices and the like are rapidly progressing and the need for electric vehicles has been greatly increased in relation to environmental problems, there is a growing demand for performance improvements in secondary batteries used as energy sources for these products. Among them, the lithium secondary battery has been attracting considerable attention as a high-performance battery because of its high energy density and high standard electrode potential.

In particular, the lithium-sulfur (Li-S) battery is a secondary battery using a sulfur-based material having a sulfur-sulfur bond (S-S bond) as a positive electrode active material and using lithium metal as a negative electrode active material. There is an advantage that sulfur, which is the main material of the positive electrode active material, is very rich in resources, is not toxic, and has a low atomic weight. In addition, theoretical discharging capacity of the lithium-sulfur battery is 1,675 mAh/g-sulfur, and its theoretical energy density is 2,600 Wh/kg. Since the theoretical energy density of the lithium-sulfur battery is much higher than the theoretical energy density of other battery systems currently under study (Ni-MH battery: 450Wh/kg, Li-FeS battery: 480 Wh/kg, Li-MnO₂ battery: 1,000Wh/kg, Na-S battery: 800 Wh/kg), the lithium-sulfur battery is the most promising battery among the batteries developed so far.

During the discharging of the lithium-sulfur battery, an oxidation reaction of lithium occurs at the negative electrode and a reduction reaction of sulfur occurs at the positive electrode. Sulfur before discharging has an annular S₈ structure. During the reduction reaction (discharging), as the S-S bond is cut off, the oxidation number of S decreases, and during the oxidation reaction (charging), as the S-S bond is re-formed, electrical energy is stored and generated using an oxidation-reduction reaction in which the oxidation number of S increases. During this reaction, sulfur is converted from annular S₈ to lithium polysulfide (Li₂Sₓ, x=8, 6, 4, 2) having a linear structure by a reduction reaction, and eventually, when the lithium polysulfide is completely reduced, lithium sulfide (Li₂S) is finally produced. By the process of reducing to each lithium polysulfide, the discharging behavior of the lithium-sulfur battery is characterized by a step-wise discharge voltage unlike a general lithium-ion battery.

However, the biggest obstacle in the commercialization of the lithium-sulfur battery is lifetime, and during the charging/discharging process, the charging/discharging efficiency is reduced and the lifetime of the battery is deteriorated. The causes of such deterioration of the lifetime of the lithium-sulfur battery are various, such as the side reactions of the electrolyte solution (deposition of by-products due to the decomposition of the electrolyte solution), the instability of lithium metal (dendrite grows on the lithium negative electrode, causing a short circuit), and the deposition of positive electrode by-products (leaching of lithium polysulfide from the positive electrode).

That is, in a battery using a sulfur-based compound as a positive electrode active material and using an alkali metal such as lithium as a negative electrode active material, the leaching and shuttle phenomenon of lithium polysulfide occurs during charging/discharging, and the lithium polysulfide is transferred to the negative electrode, thereby reducing the capacity of the lithium-sulfur battery, and thus the lithium-sulfur battery has a major problem in that its lifetime is reduced and its reactivity is reduced. That is, since the lithium polysulfide leached from the positive electrode has high solubility in the organic electrolyte solution, it can undesirably move toward the negative electrode (PS shuttling) through the electrolyte solution. As a result, a decrease in capacity occurs due to irreversible loss of the positive electrode active material, and a decrease in the lifetime of the battery occurs due to deposition of sulfur particles on the surface of the lithium metal by side reactions.

In addition, as lithium metal reacts easily with electrolyte due to its high chemical/electrochemical reactivity, a passivation layer is formed on the surface of the negative electrode. Since such a passivation layer has low mechanical strength, as the charging/discharging of the battery proceeds, its structure collapses, causing a difference in current density in a local area to form lithium dendrite on the surface of the lithium metal. In addition, the lithium dendrite formed in this way causes a short circuit inside the battery and inert lithium (dead lithium), and thus cause a problem of not only increasing the physical and chemical instability of the lithium-sulfur battery, but also reducing the capacity of the battery and shortening the cycle lifetime.

In order to solve this problem and improve the lifetime characteristic of the lithium-sulfur battery, efforts are being made to form a coating layer for preventing the leaching of lithium polysulfide on the particle surface of the positive electrode, use an additive for the positive electrode that can absorb lithium polysulfide, form an oxide film on the lithium negative electrode to control the shuttle reaction, use a functional electrolyte with a novel composition for suppressing the leaching of polysulfide into the electrolyte or so forth, but the method is somewhat complicated. Therefore, it is necessary to develop a new technology that can solve these problems and improve the lifetime characteristic of the lithium-sulfur battery.

### [Prior Art Document]

### [Patent Document]

Korean Patent Publication No. 10-2017-0121047

CN 111 640 939 A discloses secondary batteries and specifically discloses a sulfur cathode material based on a solid-phase reaction mechanism and a preparation method thereof. US 2017/256798 A1 discloses a particle comprising a form of sulfur and/or lithium sulfide (Li2S) that is doped with a group VIA element, such as selenium (e.g. Se34), tellurium (e.g. Te52), or polonium (e.g. Po84).

WO 2019/078965 A1 discloses low flammability and nonflammable localized superconcentrated electrolytes (LSEs) for stable operation of electrochemical devices, such as rechargeable batteries, supercapacitors, and sensors.

APPLIED MATERIALS & INTERFACES, vol. 6, no. 11, 15 May 2014, (2014-05-15), pages 8006-8010, teaches the use of bis(2,2,2-trifluoroethyl) ether as electrolyte co-solvent for mitigating self-discharge in lithium-sulfur batteries.

KR 2018 0057437 A discloses an electrolyte for a lithium secondary battery and to a lithium secondary battery comprising the same.

JOULE, vol. 4, no. 5, 1 May 2020 (2020-05-01), pages 1121-1135, discloses anode-free, lean-electrolyte lithium-sulfur batteries enabled by tellurium-stabilized lithium deposition.

KR 2016 0005897 A discloses a lithium secondary battery in which a compound with lithium is not reacted with an organic electrolyte when charging and discharging by using tellurium metal as an anode active material.

KR 2019 0116534 A discloses localized superconcentrated electrolytes (LSEs) for stable operation of electrochemical devices, such as rechargeable batteries, supercapacitors, and sensors.

### [Disclosure]

### [Technical Problem]

Accordingly, the inventors of the present invention have conducted various studies to solve the above problem, and as a result, completed the present invention by confirming that when the additive for the positive electrode for the lithium secondary battery contains tellurium (Te) and the additive for the electrolyte solution contains bis(2,2,2-trifluoroethyl)ether (BTFE), the lifetime characteristic of the lithium secondary battery is improved.

Accordingly, it is an object of the present invention to provide a lithium secondary battery capable of implementing excellent lifetime characteristic.

### [Technical Solution]

The above problems are solved in accordance with the independent claims. Further embodiments result from the subclaims and the following detailed description.

In order to achieve the above object, the present invention provides a lithium secondary battery comprising a positive electrode; a negative electrode; a separator interposed therebetween; and an electrolyte solution,
wherein the positive electrode comprises a positive electrode active material and an additive for the positive electrode,
wherein the additive for the positive electrode comprises tellurium,
wherein the electrolyte solution comprises a lithium salt, an organic solvent and an additive for the electrolyte solution, and
wherein the additive for the electrolyte solution comprises bis (2,2,2-trifluoroethyl) ether
wherein the positive electrode comprises a positive electrode current collector and a positive electrode active material layer disposed on at least one surface of the positive electrode current collector, and wherein the positive electrode active material layer comprises the positive electrode active material and tellurium;
tellurium is contained in an amount of 1 to 10% by weight based on a total of 100% by weight of the positive electrode active material layer; and
bis (2,2,2-trifluoroethyl)ether is contained in an amount of 1 to 20% by volume based on a total of 100% by volume of the electrolyte solution.

The positive electrode active material may comprise at least one selected from the group consisting of elemental sulfur and sulfur compounds.

The organic solvent may comprise a cyclic ether and an acyclic ether.

The cyclic ether may comprise at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, tetrahydrofuran, 2-methyl tetrahydrofuran, 2,5-dimethyl tetrahydrofuran, 2,5-dimethoxy tetrahydrofuran, 2-ethoxy tetrahydrofuran, tetrahydropyran, 1,2-dimethoxy benzene, 1,3-dimethoxy benzene, and 1,4-dimethoxy benzene.

The acyclic ether may comprise at least one selected from the group consisting of dimethyl ether, diethyl ether, dipropyl ether, methylethyl ether, methylpropyl ether, ethylpropyl ether, dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, ethylene glycol diethyl ether, and ethylene glycol ethyl methyl ether.

The organic solvent may comprise 2-methylfuran and dimethoxyethane.

The lithium salt may comprise at least one selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, lithium chloroborane, lithium lower aliphatic carboxylate, lithium tetraphenyl borate, and lithium imide.

The lithium secondary battery may be a lithium-sulfur battery.

### [Advantageous Effects]

The lithium secondary battery of the present invention comprises tellurium as an additive for the positive electrode, and bis(2,2,2-trifluoroethyl)ether as an additive for the electrolyte solution, and thus can improve the efficiency of the negative electrode containing lithium metal, suppress leaching of lithium polysulfide, and form a protective layer on the surface of the negative electrode, which is lithium metal, thereby suppressing the formation of lithium dendrites, and can reduce the side reaction with the electrolyte solution or lithium polysulfide on the surface of the negative electrode and the decomposition of the electrolyte solution accordingly. As a result, it is possible to extend the cycle that reaches 80% of the initial discharging capacity of the lithium secondary battery and thus to improve the lifetime characteristic of the lithium secondary battery.

### [Description of Drawings]

FIG. 1 is a graph measuring the lifetime characteristics of lithium-sulfur batteries of Examples 1 to 3 (wherein Example 3 is not according to the present invention) and Comparative Examples 1 to 3.
FIG. 2 is a graph evaluating the lifetime characteristic of the lithium-sulfur battery of Example 4.
FIG. 3 is a graph measuring the cycle voltage of the lithium-sulfur battery of Example 1.
FIG. 4 is a graph measuring the cycle voltage of the lithium-sulfur battery of Example 4.
FIG. 5 is a graph measuring the lifetime characteristic of the lithium-sulfur battery of Example 5.
FIG. 6 is a graph measuring the initial coulombic efficiency of the lithium-sulfur battery of Example 3 (not according to the present invention).
FIG. 7 is a graph measuring initial coulombic efficiencies of lithium-sulfur batteries of Examples 1 to 3 (wherein Example 3 is not according to the present invention) and Comparative Example 3.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" comprise plural referents unless the context clearly dictates otherwise. It is to be understood that the terms such as "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

The term "composite" as used herein refers to a material that two or more materials are combined to express a more effective function while forming physically and chemically different phases to each other.

The term "polysulfide" as used herein is a concept comprising both "polysulfide ions (Sₓ²⁻, x = 8, 6, 4, 2))"and "lithium polysulfides (Li₂Sₓ or LiSₓ⁻, x = 8, 6, 4, 2)."

Among several secondary batteries, the lithium-sulfur battery exhibits high theoretical discharging capacity and theoretical energy density, and is attracting attention as a next-generation secondary battery due to the advantage that sulfur, which is mainly used as a positive electrode active material, is rich in resources, cheap, and environmentally friendly.

Since a lithium-sulfur battery exhibits high theoretical discharging capacity and theoretical energy density among several secondary batteries, as well as lithium metal, which is mainly used as a negative electrode active material, has a very small atomic weight (6.94 g/a.u.) and density (0.534 g/cm³), thus the lithium-sulfur battery is in the spotlight as a next-generation battery due to its ease of miniaturization and weight reduction.

However, as described above, as lithium metal has high reactivity and easily reacts with an electrolyte, a passivation film is formed on the surface of lithium metal due to spontaneous decomposition of the electrolyte, which causes a non-uniform electrochemical reaction on the surface of the lithium metal, thereby forming inert lithium and lithium dendrite, and thus lowering the efficiency and stability of the negative electrode. In addition, in a lithium-sulfur battery using a sulfur-based material as a positive electrode active material, the lithium polysulfide (Li₂Sₓ, usually x≥4) with sulfur having a high oxidation number, among the lithium polysulfide (Li₂Sₓ, x = 8, 6, 4, 2) formed in the positive electrode during operation of the battery, is continuously dissolved due to its high solubility in the electrolyte, and leaches out of the reaction zone of the positive electrode, and moves to the negative electrode. At this time, the lithium polysulfide leached from the positive electrode causes a side reaction with the lithium metal, and thus lithium sulfide adheres to the surface of lithium metal, thereby causing the passivation of the electrode, as well as the utilization rate of sulfur is lowered due to the leaching of lithium polysulfide, and thus it is possible to implement only up to about 70% of the theoretical discharging capacity, and as the cycle is proceeded, there is a problem that the capacity and charging/discharging efficiency are rapidly deteriorated, thereby lowing the lifetime characteristic of the battery.

To this end, in the prior art, in order to ensure uniform reactivity on the surface of lithium metal and suppress the growth of lithium dendrites, methods of forming a protective layer on the surface of lithium metal or changing the composition of an electrolyte have been attempted. However, in the case of a protective layer introduced on the surface of lithium metal, high mechanical strength for suppressing lithium dendrites and high ionic conductivity for delivering lithium ions are required at the same time, but the mechanical strength and ionic conductivity are in a trade-off relationship with each other, and thus it is difficult to simultaneously improve the mechanical strength and the ionic conductivity, and thus the effect of improving the stability of lithium in the protective layer of lithium metal proposed so far is not excellent. In addition, due to the compatibility problem with other elements constituting the battery, the actual application is not easy because it causes serious problems in the performance and operation stability of the battery.

Therefore, in the present invention, it was attempted to improve the lifetime characteristic of the lithium secondary battery, preferably the lithium-sulfur battery, by incorporating tellurium as an additive for the positive electrode and bis(2,2,2-trifluoroethyl)ether as an additive for electrolyte solution to suppress the leaching of lithium polysulfide, and forming a protective film (solid electrolyte interface, SEI layer) on the surface of lithium metal, which is a negative electrode, in the initial discharging stage, and thus solving the above problems.

The present invention relates to a lithium secondary battery comprising a positive electrode, a negative electrode, a separator interposed therebetween, and an electrolyte solution,
wherein the positive electrode comprises a positive electrode active material and an additive for the positive electrode,
wherein the additive for the positive electrode comprises tellurium (Te),
wherein the electrolyte solution comprises a lithium salt, an organic solvent and an additive for the electrolyte solution, and
wherein the additive for the electrolyte solution comprises bis(2,2,2-trifluoroethyl)ether (BTFE)
wherein the positive electrode comprises a positive electrode current collector and a positive electrode active material layer disposed on at least one surface of the positive electrode current collector, and wherein the positive electrode active material layer comprises the positive electrode active material and tellurium;
tellurium is contained in an amount of 1 to 10% by weight based on a total of 100% by weight of the positive electrode active material layer; and
bis (2,2,2-trifluoroethyl)ether is contained in an amount of 1 to 20% by volume based on a total of 100% by volume of the electrolyte solution.

The positive electrode comprises a positive electrode current collector and a positive electrode active material layer disposed on at least one surface of the positive electrode current collector, and the positive electrode active material layer comprises a positive electrode active material and an additive for the positive electrode.

The additive for the positive electrode of the present invention comprises tellurium (Te).

The tellurium reacts with lithium polysulfide to form polytellurosulfide ions (SₓTe_{y}²⁻), and the polytellurosulfide ions are dissolved in the electrolyte solution and migrate to the lithium metal, which is the negative electrode, thereby contributing to the formation of a protective layer of the negative electrode made of lithium thiotelluride or lithium telluride. Accordingly, an improved stripping/plating process may be performed on the surface of the lithium metal, which is a negative electrode. The protective layer allows lithium metal to be plated more densely, and has an effect of suppressing unnecessary decomposition of the electrolyte solution or loss of lithium. Accordingly, the efficiency and stability of the negative electrode are improved, and thus the lifetime characteristic of the lithium secondary battery, preferably the lithium-sulfur battery comprising the same, can be increased.

In the positive electrode of the lithium secondary battery of the present invention, tellurium, which is an additive for the positive electrode, is contained in an amount of 1 to 10% by weight, preferably 3 to 7% by weight, based on a total of 100% by weight of the positive electrode active material layer. In the range of 1 to 10% by weight of tellurium, as the content of tellurium increases, the initial coulombic efficiency may decrease, but even if the initial coulombic efficiency is reduced, the lifetime characteristics of the lithium-sulfur battery can be improved. If tellurium is contained in an amount of less than 1% by weight, the effect of improving the lifetime characteristic of the lithium secondary battery is insignificant. If tellurium is contained in excess of 10% by weight, the initial coulombic efficiency is excessively reduced, and thus there may be a problem that the lifetime characteristic is also deteriorated.

The positive electrode current collector supports the positive electrode active material and is not particularly limited as long as it has high conductivity without causing chemical changes in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding strength with the positive electrode active material by having fine irregularities on its surface, and may be formed in various forms such as film, sheet, foil, mesh, net, porous body, foam, or nonwoven fabric.

The positive electrode active material may comprise at least one selected from the group consisting of elemental sulfur (S₈) and a sulfur compound. Preferably, the positive electrode active material may comprise at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2). Most preferably, the positive electrode active material may comprise inorganic sulfur.

Accordingly, the lithium secondary battery of the present invention may be a lithium-sulfur battery.

Sulfur contained in the positive electrode active material is used in combination with a conductive material such as a carbon material because it does not have electrical conductivity alone. Accordingly, the sulfur is comprised in the form of a sulfur-carbon composite, and preferably, the positive electrode active material may be a sulfur-carbon composite.

The sulfur-carbon composite comprises a porous carbon material which not only provides a framework in which the above-described sulfur can be uniformly and stably fixed, but also compensates for the low electrical conductivity of sulfur so that the electrochemical reaction can proceed smoothly.

The porous carbon material can generally be prepared by carbonizing various carbonaceous precursors. The porous carbon material may comprise uneven pores therein, the average diameter of the pores is in the range of 1 to 200 nm, and the porosity may range from 10 to 90% of the total volume of the porous carbon material. If the average diameter of the pores is less than the above range, the pore size is only at the molecular level and impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and graphite such as natural graphite, artificial graphite and expanded graphite, and activated carbon. Preferably, the porous carbon material may be carbon nanotubes.

In the sulfur-carbon composite, the sulfur is located on at least one of the inner and outer surfaces of the porous carbon material. As an example, sulfur may be present in an area of less than 100%, preferably 1 to 95%, and more preferably 40 to 96% of the entire inner and outer surfaces of the porous carbon material. When sulfur is present on the inner and outer surfaces of the porous carbon material within the above range, the maximum effect may be exhibited in terms of an electron transfer area and wettability with an electrolyte. Specifically, since the sulfur is thinly and evenly impregnated on the inner and outer surfaces of the porous carbon material in the above range area, the electron transfer contact area may be increased during the charging/discharging process. If the sulfur is located in 100% of the region of the entire inner and outer surfaces of the porous carbon material, the porous carbon material is completely covered with sulfur and thus has poor wettability to the electrolyte and its contact is reduced, so that it cannot receive electrons and thus cannot participate in the electrochemical reaction.

The sulfur-carbon composite may comprise 65 to 90% by weight, preferably 70 to 85% by weight, more preferably 72 to 80% by weight of sulfur, based on 100% by weight of the sulfur-carbon composite. If the content of sulfur is less than the above-described range, as the content of the porous carbon material in the sulfur-carbon composite is relatively increased, the specific surface area is increased, so that the content of the binder is increased during the manufacture of the positive electrode. The increase in the amount of the binder used may eventually increase the sheet resistance of the positive electrode and act as an insulator to prevent electron pass, thereby deteriorating the performance of the battery. On the contrary, if the content of sulfur exceeds the above range, sulfur that cannot be combined with the porous carbon material agglomerates between them or re-leaches to the surface of the porous carbon material, and thus becomes difficult to receive electrons and cannot participate in electrochemical reactions, resulting in loss of the capacity of the battery.

The method for preparing the sulfur-carbon composite of the present invention is not particularly limited in the present invention, and a method commonly used in the art may be used. As an example, a method of simply mixing the sulfur and the porous carbon material and then heat-treating the mixture to compound it may be used.

The positive electrode active material may further comprise at least one selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Tl and the like, and the group IVA element may comprise Ge, Sn, Pb, and the like.

In the positive electrode for the lithium secondary battery of the present invention, the positive electrode active material may be contained in an amount of 50 to 95% by weight based on a total of 100% by weight of the positive electrode active material layer constituting the positive electrode for the lithium secondary battery. In the content of the positive electrode active material, based on a total of 100% by weight of the total positive electrode active material layer, the lower limit may be 70% by weight or more or 85% by weight or more, and the upper limit may be 99% by weight or less or 90% by weight or less. The content of the positive electrode active material may be set by a combination of the lower limit value and the upper limit value. If the content of the positive electrode active material is less than the above range, it is difficult for the positive electrode to sufficiently exert an electrochemical reaction. On the contrary, if the content exceeds the above range, there is a problem in that the physical properties of the electrode are deteriorated because the content of the binder is relatively insufficient.

In addition, the positive electrode active material layer may further include a binder and an electrically conductive material in addition to the positive electrode active material and tellurium.

The binder may be additionally used to adhere the positive electrode active material and tellurium well to the positive electrode current collector.

The binder maintains the positive electrode active material in the positive electrode current collector, and organically connects the positive electrode active materials to increase the bonding force between them, and any binder known in the art may be used.

For example, the binder may be, but is not limited to, polyvinylidene fluoride (PVDF), polyvinyl alcohol (PVA), polyacrylic acid (PAA), polyacrylic acid metal salt (Metal-PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, polyvinyl pyrrolidone, polytetrafluoroethylene, polyethylene, polypropylene, ethylene-propylene-diene polymer (EPDM), sulfonated-EPDM, styrene-butadiene rubber, fluorine rubber, hydroxypropyl cellulose, regenerated cellulose, various copolymers thereof and the like.

The content of the binder may be 1 to 10% by weight based on a total of 100% by weight of the positive electrode active material layer constituting the positive electrode for the lithium secondary battery. If the content of the binder is less than the above range, the physical properties of the positive electrode may be deteriorated, and thus the positive electrode active material may fall off. If the content of the binder exceeds the above range, the ratio of the positive electrode active material in the positive electrode is relatively reduced, so that the capacity of the battery can be reduced. Therefore, it is preferable that the content of the binder is determined to be appropriate within the above-mentioned range.

In addition, the electrically conductive material may be additionally used to further improve the conductivity of the positive electrode active material.

The electrically conductive material is a material that acts as a path, through which electrons are transferred from the current collector to the positive electrode active material, by electrically connecting the electrolyte and the positive electrode active material. The electrically conductive material can be used without limitation as long as it has electrical conductivity.

For example, as an electrically conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The electrically conductive material may be contained in an amount of 1 to 10% by weight, preferably 4 to 7% by weight, based on a total of 100% by weight of the positive electrode active material layer constituting the positive electrode. If the content of the electrically conductive material is less than the above range, it is difficult to transfer electrons between the positive electrode active material and the current collector, thereby reducing voltage and capacity. On the contrary, if the content exceeds the above range, the proportion of positive electrode active material is relatively reduced and thus the total energy (charge amount) of the battery can be reduced. Therefore, it is preferable that the content of the electrically conductive material is determined to be an appropriate content within the above-described range.

In the present invention, the method for manufacturing the positive electrode is not particularly limited, and various methods known by those skilled in the art or various methods modified therefor can be used.

For example, the positive electrode may be prepared by preparing a slurry composition for the positive electrode comprising the above-described components, and then applying it to at least one surface of the positive electrode current collector.

The slurry composition for the positive electrode comprises the positive electrode active material and tellurium as described above, and may further comprise a binder, an electrically conductive material, and a solvent.

As the solvent, one capable of uniformly dispersing a positive electrode active material, tellurium, an electrically conductive material, and a binder is used. Such a solvent is an aqueous solvent, and water is most preferred, and in this case, water may be distilled water or deionized water. However, it is not necessarily limited thereto, and if necessary, a lower alcohol that can be easily mixed with water may be used. Examples of the lower alcohol include methanol, ethanol, propanol, isopropanol, and butanol, and preferably, they may be used in combination with water.

The content of the solvent may be contained at a level having a concentration that allows easy coating, and the specific content varies depending on the application method and apparatus.

The slurry composition for a positive electrode may additionally contain, if necessary, materials commonly used for the purpose of improving its function in the relevant technical field as necessary. For example, a viscosity modifier, a fluidizing agent, a filler, etc. are mentioned.

The method of applying the slurry composition for a positive electrode is not particularly limited in the present invention, and for example, methods such as a doctor blade method, a die casting method, a comma coating method, and a screen-printing method can be used. In addition, after being molded on a separate substrate, the slurry for the positive electrode may be applied on the positive electrode current collector by a pressing or lamination method.

After the application, a drying process for removing the solvent may be performed. The drying process is performed at a temperature and time at a level capable of sufficiently removing the solvent, and the conditions may vary depending on the type of the solvent, and thus are not particularly limited in the present invention. Examples of the drying method may comprise a drying method by warm air, hot air, or low-humidity air, a vacuum drying method, and a drying method by irradiation with (far)-infrared radiation or electron beam. The drying rate is usually adjusted so that the solvent can be removed as quickly as possible within a speed range that does not cause cracks in the positive electrode active material layer due to the concentration of stress and does not delaminate the positive electrode active material layer from the positive electrode current collector.

Additionally, the density of the positive electrode active material in the positive electrode may be increased by pressing the current collector after drying. Methods, such as a mold press and a roll press, are mentioned as a press method.

The electrolyte solution includes a lithium salt, an organic solvent and an additive for the electrolyte solution.

The additive for the electrolyte solution comprises bis(2,2,2-trifluoroethyl)ether (BTFE).

The bis(2,2,2-trifluoroethyl)ether has low solubility to lithium polysulfide. Accordingly, the bis(2,2,2-trifluoroethyl) ether inhibits the leaching of lithium polysulfide, and a protective layer may be formed on the surface of the negative electrode in the initial discharge stage of a lithium secondary battery, specifically, a lithium-sulfur battery. Therefore, a side reaction between lithium polysulfide and lithium metal, which is a negative electrode, can be effectively suppressed, thereby reducing the shuttle phenomenon caused by lithium polysulfide and thus improving the lifetime characteristic of the lithium-sulfur battery.

The bis (2,2,2-trifluoroethyl)ether is comprised in an amount of 1 to 20% by volume, preferably 5 to 15% by volume, more preferably 7 to 12% by volume based on a total of 100% by volume of the electrolyte solution.

If the bis(2,2,2-trifluoroethyl)ether is contained in an amount of less than 1% by volume, the effect of improving the lifetime characteristics of the lithium-sulfur battery is insignificant. If the bis(2,2,2-trifluoroethyl)ether exceeds 20% by volume, an overvoltage may be formed, which may cause a problem in that high-rate discharging capacity and output characteristics are reduced.

The total 100% by volume of the electrolyte solution means the volume of the liquid excluding the lithium salt.

The lithium salt is comprised as an electrolyte salt of the electrolyte solution, and the type of the lithium salt is not particularly limited in the present invention, and may be used without limitation as long as it can be commonly used in a lithium-sulfur battery.

For example, the lithium salt may comprise at least one selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, lithium chloroborane, lithium lower aliphatic carboxylate, lithium tetraphenyl borate and lithium imide, and preferably, the lithium salt may be (SO₂F)₂NLi (lithium bis (fluorosulfonyl) imide, LiFSI).

The concentration of the lithium salt may be determined in consideration of ion conductivity, solubility and the like, and may be, for example, 0.1 to 4.0 M, preferably 0.5 to 2.0 M. If the concentration of the lithium salt is less than the above range, it is difficult to ensure ion conductivity suitable for operating the battery. On the other hand, if the concentration exceeds the above range, the viscosity of the electrolyte solution is increased to lower the mobility of the lithium ion and the decomposition reaction of the lithium salt itself may increase to deteriorate the performance of the battery. Therefore, the concentration is adjusted appropriately within the above range.

The organic solvent is a medium through which ions involved in the electrochemical reaction of the lithium secondary battery can move, and comprises an organic solvent.

The organic solvent comprises cyclic ethers and acyclic ethers.

The ether compound secures electrochemical stability within the operating voltage range of the battery, while maintaining the solubility of sulfur or sulfur-based compounds, and has relatively little occurrence of side reactions with intermediate products during the operation of the battery.

The cyclic ether may comprise at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, tetrahydrofuran, 2-methyl tetrahydrofuran, 2,5-dimethyl tetrahydrofuran, 2,5-dimethoxy tetrahydrofuran, 2-ethoxy tetrahydrofuran, tetrahydropyran, 1,2-dimethoxy benzene, 1,3-dimethoxy benzene, and 1,4-dimethoxy benzene. Preferably, it may contain 2-methylfuran.

The dioxolane-based compound mainly used in the cyclic ether has very high solubility to lithium polysulfide and thus is very likely to cause a shuttle phenomenon, and accelerates the loss of sulfur, which is a positive electrode active material, and can reduce the lifetime performance of the lithium secondary battery. Therefore, the dioxolane-based compound is not preferable for use as an organic solvent of an electrolyte solution for the lithium secondary battery of the present invention.

The acyclic ether may comprise at least one selected from the group consisting of dimethyl ether, diethyl ether, dipropyl ether, methylethyl ether, methylpropyl ether, ethylpropyl ether, dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, ethylene glycol diethyl ether, and ethylene glycol ethyl methyl ether, and preferably dimethyl ether.

The cyclic ether and the acyclic ether may be mixed and used in a volume ratio of 1:9 to 9:1, preferably 1:2 to 1:5.

The electrolyte solution for the lithium secondary battery of the present invention may preferably comprise a lithium salt, 2-methylfuran, dimethoxyethane and bis(2,2,2-trifluoroethyl)ether.

In addition, the electrolyte solution for the lithium secondary battery of the present invention may further comprise an organic solvent commonly used in an electrolyte solution for a lithium secondary battery. For example, the electrolyte solution may further comprise at least one selected from the group consisting of ester compounds, amide compounds, linear carbonate compounds, and cyclic carbonate compounds.

The ester compound may comprise, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone.

The linear carbonate compound may comprise, but is not limited to, at least one selected from the group consisting of dimethyl carbonate, diethyl carbonate, dipropyl carbonate, ethylmethyl carbonate, methylpropyl carbonate, and ethylpropyl carbonate.

The cyclic carbonate compound may comprise, but is not limited to, at least one selected from the group consisting of ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate, and halides thereof.

The electrolyte solution for the lithium secondary battery of the present invention may further contain nitric acid or a nitrous acid-based compound in addition to the above-described components. The nitric acid or a nitrous acid-based compound has the effect of forming a stable film on the lithium metal electrode, which is a negative electrode, and improving the charging/discharging efficiency.

The nitric acid or nitrous acid-based compound is not particularly limited in the present invention, but may be at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid-based compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably may be lithium nitrate.

In addition, the electrolyte solution of the present invention may further comprise other additives for the purpose of improving charging/discharging characteristics, flame retardancy, and the like. Examples of the additives may be pyridine, triethylphosphite, triethanolamine, cyclic ether, ethylene diamine, n-glyme, hexamethyl phosphoric triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxy ethanol, aluminum trichloride, fluoroethylene carbonate (FEC), propene sultone (PRS), and vinylene carbonate (VC).

The injection of the electrolyte solution can be performed at an appropriate stage of the manufacturing process of the electrochemical device depending on the manufacturing process and required properties of the final product. That is, it can be applied before assembling the electrochemical device or in the final stage of assembling the electrochemical device.

The negative electrode for the lithium secondary battery of the present invention may comprise a negative electrode current collector and a negative electrode active material layer applied to one or both surfaces of the negative electrode current collector. Also, the negative electrode may be a lithium metal plate.

The negative electrode current collector is for supporting the negative electrode active material layer, and is as described in the positive electrode current collector.

The negative electrode active material layer may comprise an electrically conductive material, a binder, etc. in addition to the negative electrode active material. At this time, the electrically conductive material and the binder are as described above.

The negative electrode active material may comprise a material capable of reversibly intercalating or deintercalating lithium ion (Li⁺), a material capable of reversibly forming lithium containing compounds by reacting with lithium ion, or lithium metal or lithium alloy.

The material capable of reversibly intercalating or deintercalating lithium ion (Li⁺)can be, for example, crystalline carbon, amorphous carbon, or a mixture thereof. The material capable of reacting with lithium ion (Li⁺)to reversibly form lithium containing compounds may be, for example, tin oxide, titanium nitrate, or silicone. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically may be in the form of a lithium metal thin film or lithium metal powder.

The method of forming the negative electrode active material is not particularly limited, and a method of forming a layer or film commonly used in the art may be used. For example, a method such as compression, coating, or deposition may be used. In addition, a case, in which a thin film of metallic lithium is formed on a metal plate by initial charging after assembling a battery without a lithium thin film in the current collector, is also comprised in the negative electrode of the present invention.

The separator may be positioned between the positive electrode and the negative electrode.

The separator separates or insulates the positive electrode and the negative electrode from each other, and enables transport of lithium ions between the positive electrode and the negative electrode, and may be made of a porous nonconductive or insulating material. The separator can be used without any particular limitation as long as it is used as a separator in a lithium secondary battery. Such separator may be an independent member such as a film and may be a coating layer added to the positive electrode and/or the negative electrode.

As the separator, a separator with excellent impregnating ability for the electrolyte along with low resistance to ion migration in the electrolyte solution is preferable.

The separator may be made of a porous substrate. Any of the porous substrates can be used as long as it is a porous substrate commonly used in a secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, if the thickness is excessively thinner than the lower limit described above, mechanical properties are deteriorated and thus the separator may be easily damaged during use of the battery.

The average diameter and porosity of the pores present in the porous substrate are also not particularly limited, but may be 0.001 *µ*m to 50 *µ*m and 10 to 95%, respectively.

The lithium secondary battery according to the present invention can be manufactured by lamination, stacking, and folding processes of the separator and the electrodes, in addition to the usual winding process.

The shape of the lithium secondary battery is not particularly limited, and may be various shapes such as a cylindrical shape, a laminate shape, and a coin shape.

The lithium secondary battery, specifically the lithium-sulfur battery of the present invention contains tellurium as an additive for the positive electrode. The tellurium may contribute to the formation of a protective layer on the surface of the negative electrode in the initial discharging stage of the lithium-sulfur battery, thereby performing an improved stripping/plating process on the surface of the negative electrode. As a result, the efficiency and stability of the negative electrode can be improved, thereby improving the lifetime characteristic of the lithium-sulfur battery.

In addition, the lithium-sulfur battery of the present invention contains bis (2,2,2-trifluoroethyl)ether as an additive for the electrolyte solution. The bis(2,2,2-trifluoroethyl)ether can inhibit the leaching of lithium polysulfide, and effectively inhibit a side reaction between lithium polysulfide and lithium metal as a negative electrode by forming a protective layer on the surface of the negative electrode in the initial discharge stage of the lithium-sulfur battery, thereby improving the lifetime characteristic of the lithium-sulfur battery.

Accordingly, the lithium secondary battery of the present invention has the effect of improving lifetime characteristic, and specifically can extend the number of cycles in which the discharging capacity reaches 80% of the initial discharging capacity.

Hereinafter, preferred examples of the present invention will be described in order to facilitate understanding of the present invention. It will be apparent to those skilled in the art, however, that the following examples are illustrative of the present invention

### <Preparation of lithium-sulfur battery>

### Example 1.

A sulfur-carbon (CNT) composite (S:C=75:25 (weight ratio)) as a positive electrode active material and 3 wt.% of aqueous lithium-polyacrylic acid (Li-PAA) solution were mixed to prepare a mixed solution. Thereafter, a powder of tellurium (Te) was added to the mixed solution. At this time, the weight ratio of the sulfur-carbon composite, the solid content of lithium-polyacrylic acid and tellurium was 90:5:5. Additional water was added thereto and mixed to prepare a slurry for a positive electrode having a solid content of 32% by weight.

The slurry for the positive electrode was applied on an aluminum foil current collector and then coated to a certain thickness using a Mathis coater (Mathis Switzerland, SV-M). Thereafter, the positive electrode was prepared by drying at a temperature of 50°C for 2 hours.

The loading amount of the positive electrode was 3.3 mAh/cm², and the porosity was 73%.

0.75 M LiFSI and 4 % by weight of lithium nitrate (LiNO₃) were dissolved in an organic solvent obtained by mixing 2-methylfuran (2-MeF), bis(2,2,2-trifluoroethyl)ether (BTFE) and 1,2-dimethoxyethane (DME) in a volume of 2:1:7 to prepare an electrolyte solution. At this time, the bis (2,2,2-trifluoroethyl)ether is contained in an amount of 10% by volume based on the total volume of the electrolyte solution.

After placing the prepared positive electrode and the negative electrode to face each other, and interposing a polyethylene separator having a thickness of 16 µm and a porosity of 45% between them, this was put in an aluminum pouch, and then the electrolyte solution was injected and sealed to prepare a lithium-sulfur battery.

In this case, a lithium metal thin film having a thickness of 30 µm was used as a negative electrode.

### Example 2.

A lithium-sulfur battery was prepared in the same manner as in Example 1, except that the weight ratio of the sulfur-carbon complex, the solid content of lithium-polyacrylic acid and tellurium is 85:5:10.

### Example 3 (not according to the invention).

A lithium-sulfur battery was prepared in the same manner as in Example 1, except that the weight ratio of the sulfur-carbon complex, the solid content of lithium-polyacrylic acid and tellurium is 80:5:15.

### Example 4.

A lithium-sulfur battery was prepared in the same manner as in Example 1, except that 2-methylfuran (2-MeF), bis(2,2,2-trifluoroethyl)ether (BTFE) and 1,2-dimethoxyethane (DME) were mixed in a volume of 20:25:55.

### Example 5.

A lithium-sulfur battery was prepared in the same manner as in Example 1, except that 1,3-dioxolane (DOL), bis(2,2,2-trifluoroethyl)ether (BTFE) and 1,2-dimethoxyethane (DME) are mixed in a volume of 40:10:50.

### Comparative Example 1.

A sulfur-carbon (CNT) composite (S:C=75:25 (weight ratio)) as a positive electrode active material and 3 wt.% of aqueous lithium-polyacrylic acid (Li-PAA) solution were mixed to prepare a mixed solution. At this time, the weight ratio of the sulfur-carbon composite, and the solid content of lithium-polyacrylic acid was 95:5. Additional water was added thereto and mixed to prepare a slurry for a positive electrode having a solid content of 32% by weight.

The slurry for the positive electrode was applied on an aluminum foil current collector and then coated to a certain thickness using a Mathis coater (Mathis Switzerland, SV-M). Thereafter, the positive electrode was prepared by drying at a temperature of 50°C for 2 hours.

The loading amount of the positive electrode was 3.3 mAh/cm², and the porosity was 73%.

0.75 M LiFSI and 4 % by weight of lithium nitrate (LiNO₃) were dissolved in an organic solvent obtained by mixing 2-methylfuran (2-MeF) and 1,2-dimethoxyethane (DME) in a volume of 1:4 to prepare an electrolyte solution.

After placing the prepared positive electrode and the negative electrode to face each other, and interposing a polyethylene separator having a thickness of 16 *µ*m and a porosity of 45% between them, the electrolyte solution was injected to prepare a lithium-sulfur battery.

In this case, a lithium metal thin film having a thickness of 30 *µ*m was used as a negative electrode.

### Comparative Example 2.

A lithium-sulfur battery was prepared in the same manner as in Example 1, except that 0.75 M LiFSI and 4 % by weight of lithium nitrate (LiNO₃) were dissolved in an organic solvent obtained by mixing 2-methylfuran (2-MeF) and 1,2-dimethoxyethane (DME) in a volume of 1:4 to prepare an electrolyte solution.

### Comparative Example 3.

A sulfur-carbon (CNT) composite (S:C=75:25 (weight ratio)) as a positive electrode active material and 3 wt.% of aqueous lithium-polyacrylic acid (Li-PAA) solution were mixed to prepare a mixed solution. At this time, the weight ratio of the sulfur-carbon composite, and the solid content of lithium-polyacrylic acid was 95:5. Additional water was added thereto and mixed to prepare a slurry for a positive electrode having a solid content of 32% by weight.

Except for these, the same manner as in Example 1 was performed to prepare a lithium-sulfur battery.

### Experimental Example 1. Evaluation of lifetime characteristics of lithium-sulfur battery

For the batteries prepared in Examples 1 to 3 and Comparative Examples 1 to 3, the performance was evaluated using a charging/discharging measuring device (PESC05-0.01, PNE solution, Korea).

In the first 3 cycles, the charging/discharging capacity from 2.5 to 1.8V was measured at 0.1C current density, and from the fourth cycle, the charging/discharging capacity was measured by discharging at 0.3C and charging at 0.2C. The result of capacity retention was measured by setting the discharging capacity of the fourth cycle of the lithium-sulfur battery of each Example and Comparative Example 1 to 100%, and calculating the relative capacity of subsequent cycles, and the discharging capacity was measured until the discharging capacity reached 80% (cycle@80%).

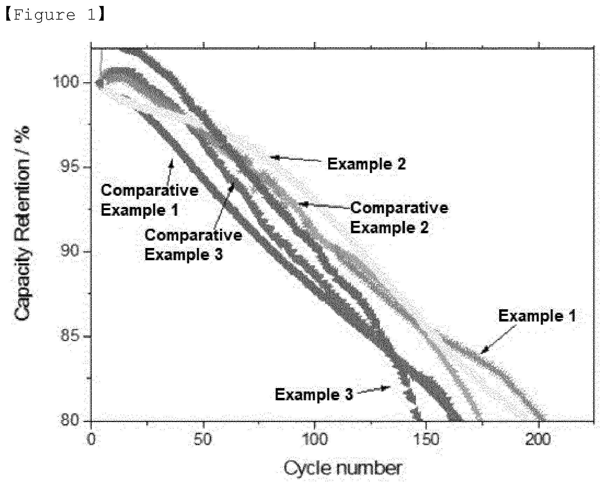

The results are shown in Table 1 and FIG. 1 below.

**Table 1:**

| | Cycle@80% | Improvement rate (%) |
|---|---|---|
| Comparative Example 1 | 164 cycle | - |
| Comparative Example 2 | 174 cycle | 6.1% |
| Comparative Example 3 | 163 cycle | - |
| Example 1 | 202 cycle | 23.2% |
| Example 2 | 198 cycle | 20.7% |
| Example 3 **(not according to the invention)** | 147 cycle | - |

From the above results, the lithium-sulfur battery of Example 1, which contains 5% by weight of tellurium based on a total of 100% by weight of the positive electrode active material layer and contains bis(2,2,2-trifluoroethyl)ether, showed very improved lifetime characteristic. In addition, the lithium-sulfur battery of Example 2, which contains 10% by weight of tellurium based on a total of 100% by weight of the positive electrode active material layer and contains bis(2,2,2-trifluoroethyl)ether, also showed improved lifetime characteristic.

On the contrary, the lithium-sulfur battery of Example 3 **(not according to the invention),** which contains 15% by weight of tellurium based on a total of 100% by weight of the positive electrode active material layer and contains bis(2,2,2-trifluoroethyl)ether, contained tellurium in an amount exceeding 1 to 10% by weight, which is a desirable content range of tellurium, and thus showed a decrease in lifetime characteristic. In addition, the lithium-sulfur battery of Comparative Example 2 containing only tellurium showed slight improvement in lifetime characteristic, and the lithium-sulfur battery of Comparative Example 3 containing only bis(2,2,2-trifluoroethyl)ether did not show the effect of improving lifetime characteristic.

Therefore, it can be seen that when tellurium is included as an additive for the positive electrode, and bis (2,2,2-trifluoroethyl)ether is included as an additive for electrolyte solution, and tellurium is included in an amount of 1 to 10% by weight based on a total of 100% by weight of the positive electrode active material layer, thus the lifetime characteristic of the lithium-sulfur battery may be improved.

In addition, the lifetime characteristics of the lithium-sulfur batteries of Examples 4 and 5 were measured in the same manner as above.

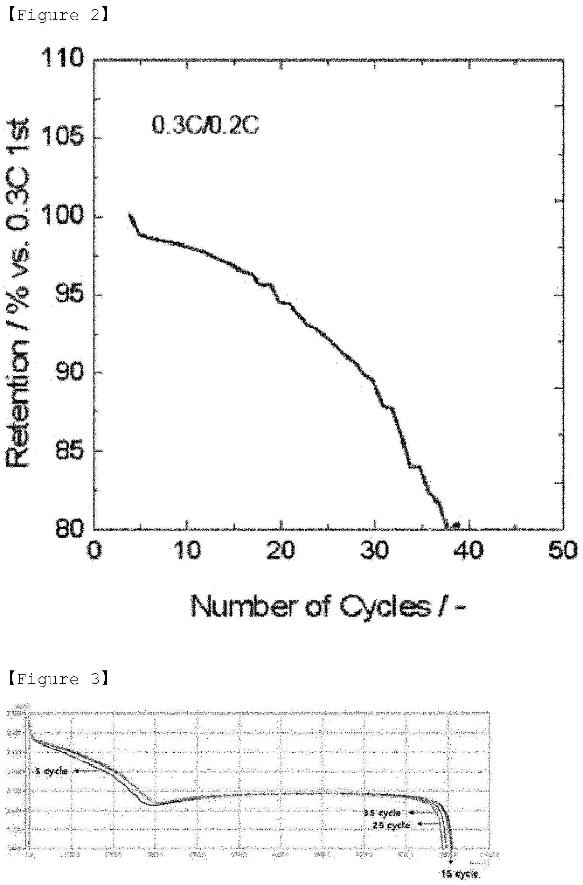

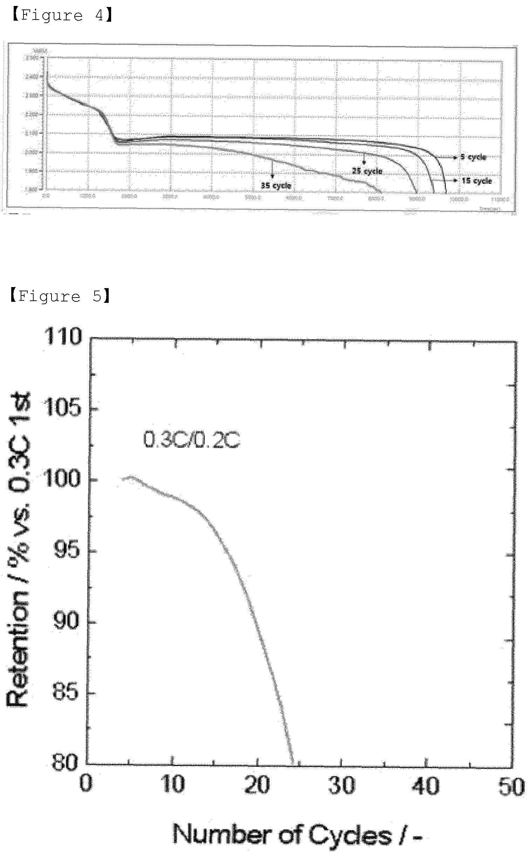

Example 4 is a lithium-sulfur battery using an electrolyte solution containing bis(2,2,2-trifluoroethyl)ether at 25% by volume, which showed that the deterioration of the lifetime was accelerated (FIG. 2). In addition, voltages in the 5th, 15th, 25th, and 35th cycles of the lithium-sulfur batteries of Examples 1 and 4 were measured. In the case of the lithium-sulfur battery of Example 1, the cycle capacity is kept constant (FIG. 3), whereas in the case of the lithium-sulfur battery of Example 4, the capacity is decreased as the cycle is progressed, and the overvoltage at the end portion is gradually deepened, thereby accelerating the degradation of the capacity (FIG. 4).

From the above results, it can be seen that when tellurium is included as an additive for the positive electrode, and bis (2,2,2-trifluoroethyl)ether is comprised as an additive for the electrolyte solution, and the bis (2,2,2-trifluoroethyl)ether is comprised in an amount of 1 to 20% by volume based on 100% by volume of the total electrolyte solution, thus the lifetime characteristic can be further improved.

Example 5 is a lithium-sulfur battery using 1,3-dioxolane (DOL) instead of 2-methylfuran as an electrolyte solution, which uses 1,3-dioxolane/1,2-dimethoxyethane as the electrolyte solution base. From the results of the lifetime characteristic of the lithium-sulfur battery in Example 5, it was seen that the deterioration appeared rapidly (FIG. 5).

From the above results, it can be seen that even if tellurium is comprised as an additive for the positive electrode and bis (2,2,2-trifluoroethyl)ether is comprised as an additive for electrolyte solution, when 1,3-dioxolane is used as the electrolyte solution, it does not show the effect of improving the lifetime characteristic.

That is, when tellurium is comprised as an additive for the positive electrode in an amount of 1 to 10% by weight based on a total of 100% by weight of the positive electrode active material layer, and bis (2,2,2-trifluoroethyl)ether is comprised as an additive for the electrolyte solution in an amount of 1 to 20% by volume based on a total of 100% by volume of the electrolyte solution and a dioxolane-based compound is not used as the electrolyte solution, thus an effect of improving the lifetime characteristic of the lithium-sulfur battery may appear.

### Experimental Example 2. Evaluation of initial coulombic efficiency of lithium-sulfur battery

For the batteries prepared in Examples 1 to 3 and Comparative Example 3, the initial coulombic efficiency depending on the content of tellurium was evaluated using a charge/discharge measuring device (PESCO5-0.01, PNE solution, Korea) .

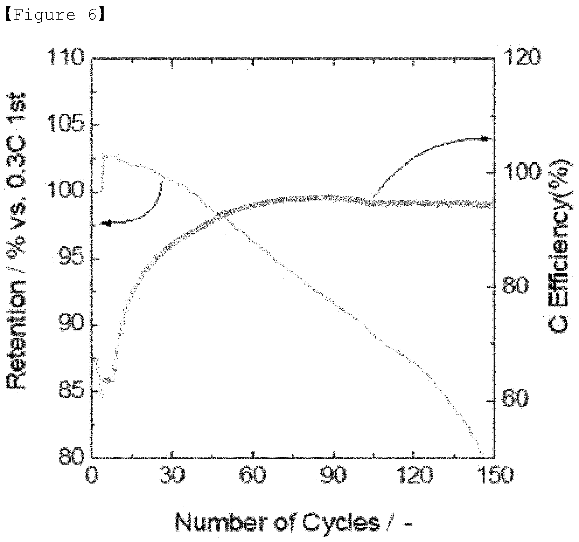

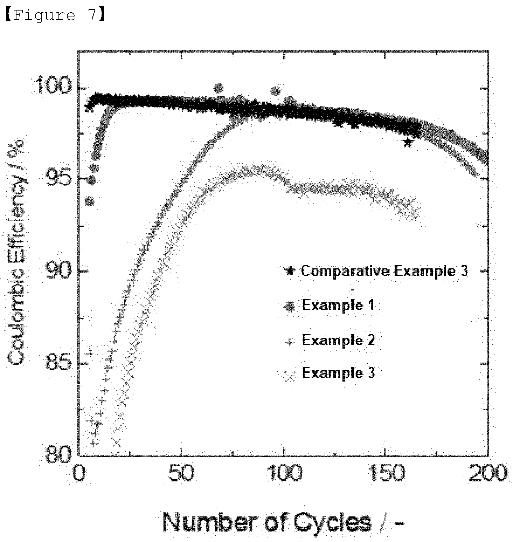

In the first 3 cycles, the charging and discharging capacities from 2.5 to 1.8V were measured at 0.1C current density, and from the 4th cycle, the initial coulombic efficiency was measured by discharging at 0.3C and charging at 0.2C. The results are shown in FIGs. 6 and 7.

The lithium-sulfur battery of Comparative Example 3 without tellurium showed no decrease in initial coulombic efficiency. However, the lithium-sulfur batteries of Examples 1 to 3 containing tellurium showed a decrease in initial coulombic efficiency. The lithium-sulfur batteries of Examples 1 and 2 contain tellurium in an amount of 5 and 10% by weight, respectively, based on a total of 100% by weight of the positive electrode active material layer, which showed a decrease in the initial coulombic efficiency, but showed improvement in the lifetime characteristic of the lithium-sulfur battery as in the results of Experimental Example 1. The lithium-sulfur battery of Example 3 contains tellurium in an amount of 15% by weight based on a total of 100% by weight of the positive electrode active material layer, which exceeds the tellurium content range of 1 to 10% by weight. Accordingly, the lithium-sulfur battery of Example 3 showed an excessive decrease in the initial coulombic efficiency, and showed no improvement in the lifetime characteristic of the lithium-sulfur battery as in the result of Experimental Example 1 due to an excessive reduction in the coulombic efficiency.

From this, it was found that if tellurium is contained in an amount exceeding 10% by weight based on a total of 100% by weight of the positive electrode active material layer, the coulombic efficiency is reduced, and found that it is preferable that tellurium is included in an amount of 1 to 10% by weight.

## Claims

1. A lithium secondary battery, comprising:
a positive electrode;
a negative electrode;
a separator interposed therebetween; and
an electrolyte solution,
wherein the positive electrode comprises a positive electrode active material and an additive for the positive electrode,
wherein the additive for the positive electrode comprises tellurium,
wherein the electrolyte solution comprises a lithium salt, an organic solvent, and an additive for the electrolyte solution, and
wherein the additive for the electrolyte solution comprises bis (2,2,2-trifluoroethyl) ether;
wherein the positive electrode comprises a positive electrode current collector and a positive electrode active material layer disposed on at least one surface of the positive electrode current collector, and wherein the positive electrode active material layer comprises the positive electrode active material and tellurium;
tellurium is contained in an amount of 1 to 10% by weight based on a total of 100% by weight of the positive electrode active material layer; and
bis (2,2,2-trifluoroethyl)ether is contained in an amount of 1 to 20% by volume based on a total of 100% by volume of the electrolyte solution.

2. The lithium secondary battery according to claim 1, wherein the positive electrode active material includes at least one selected from the group consisting of elemental sulfur and sulfur compounds.

3. The lithium secondary battery according to claim 1, wherein the organic solvent comprises a cyclic ether and an acyclic ether.

4. The lithium secondary battery according to claim 3, wherein the cyclic ether comprises at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, tetrahydrofuran, 2-methyl tetrahydrofuran, 2,5-dimethyl tetrahydrofuran, 2,5-dimethoxy tetrahydrofuran, 2-ethoxy tetrahydrofuran, tetrahydropyran, 1,2-dimethoxy benzene, 1,3-dimethoxy benzene, and 1,4-dimethoxy benzene.

5. The lithium secondary battery according to claim 3, wherein the acyclic ether comprises at least one selected from the group consisting of dimethyl ether, diethyl ether, dipropyl ether, methylethyl ether, methylpropyl ether, ethylpropyl ether, dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, ethylene glycol diethyl ether, and ethylene glycol ethyl methyl ether.

6. The lithium secondary battery according to claim 1, wherein the organic solvent comprises 2-methylfuran and dimethoxyethane.

7. The lithium secondary battery according to claim 1, wherein the lithium salt comprises at least one selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, lithium chloroborane, lithium lower aliphatic carboxylate, lithium tetraphenyl borate, and lithium imide.

8. The lithium secondary battery according to claim 1, wherein the lithium secondary battery is a lithium-sulfur battery.

## Patentansprüche

1. Lithium-Sekundärbatterie, umfassend:
eine positive Elektrode;
eine negative Elektrode;
einen Separator, der dazwischen angeordnet ist; und
eine Elektrolytlösung,
wobei die positive Elektrode ein Positivelektroden-Aktivmaterial und ein Additiv für die positive Elektrode umfasst,
wobei das Additiv für die positive Elektrode Tellur umfasst,
wobei die Elektrolytlösung ein Lithiumsalz, ein organisches Lösungsmittel und ein Additiv für die Elektrolytlösung umfasst, und
wobei das Additiv für die Elektrolytlösung Bis(2,2,2-trifluorethyl)ether umfasst;
wobei die positive Elektrode einen Positivelektroden-Stromabnehmer und eine Positivelektroden-Aktivmaterialschicht umfasst, die auf mindestens einer Oberfläche des Positivelektroden-Stromabnehmers angeordnet ist, und wobei die Positivelektroden-Aktivmaterialschicht das Positivelektroden-Aktivmaterial und Tellur umfasst;
Tellur in einer Menge von 1 bis 10 Gew.-%, bezogen auf insgesamt 100 Gew.-% der Positivelektroden-Aktivmaterialschicht, enthalten ist; und
Bis(2,2,2-trifluorethyl)ether in einer Menge von 1 bis 20 Vol.-%, bezogen auf insgesamt 100 Vol.-% der Elektrolytlösung, enthalten ist.

2. Lithium-Sekundärbatterie nach Anspruch 1, wobei das Positivelektroden-Aktivmaterial mindestens eines umfasst, das aus der Gruppe ausgewählt ist, die aus elementarem Schwefel und Schwefelverbindungen besteht.

3. Lithium-Sekundärbatterie nach Anspruch 1, wobei das organische Lösungsmittel einen cyclischen Ether und einen acyclischen Ether umfasst.

4. Lithium-Sekundärbatterie nach Anspruch 3, wobei der cyclische Ether mindestens eines umfasst, das aus der Gruppe ausgewählt ist, die aus Furan, 2-Methylfuran, 3-Methylfuran, 2-Ethylfuran, 2-Propylfuran, 2-Butylfuran, 2,3-Dimethylfuran, 2,4-Dimethylfuran, 2,5-Dimethylfuran, Pyran, 2-Methylpyran, 3-Methylpyran, 4-Methylpyran, Benzofuran, 2-(2-Nitrovinyl)furan, Tetrahydrofuran, 2-Methyltetrahydrofuran, 2,5-Dimethyltetrahydrofuran, 2,5-Dimethoxytetrahydrofuran, 2-Ethoxytetrahydrofuran, Tetrahydropyran, 1,2-Dimethoxybenzol, 1,3-Dimethoxybenzol und 1,4-Dimethoxybenzol besteht.

5. Lithium-Sekundärbatterie nach Anspruch 3, wobei der acyclische Ether mindestens eines umfasst, das aus der Gruppe ausgewählt ist, die aus Dimethylether, Diethylether, Dipropylether, Methylethylether, Methylpropylether, Ethylpropylether, Dimethoxyethan, Diethoxyethan, Methoxyethoxyethan, Diethylenglykoldimethylether, Diethylenglykoldiethylether, Diethylenglykolmethylethylether, Triethylenglykoldimethylether, Triethylenglykoldiethylether, Triethylenglykolmethylethylether, Tetraethylenglykoldimethylether, Tetraethylenglykoldiethylether, Tetraethylenglykolmethylethylether, Polyethylenglykoldimethylether, Ethylenglykoldiethylether und Ethylenglykolethylmethylether besteht.

6. Lithium-Sekundärbatterie nach Anspruch 1, wobei das organische Lösungsmittel 2-Methylfuran und Dimethoxyethan umfasst.

7. Lithium-Sekundärbatterie nach Anspruch 1, wobei das Lithiumsalz mindestens eines umfasst, das aus der Gruppe ausgewählt ist, die aus LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₃SO₂)₂, LiN(SO₂F)₂, Lithiumchlorboran, niederaliphatischem Lithiumcarboxylat, Lithiumtetraphenylborat und Lithiumimid besteht.

8. Lithium-Sekundärbatterie nach Anspruch 1, wobei die Lithium-Sekundärbatterie eine Lithium-Schwefel-Batterie ist.

## Revendications

1. Batterie rechargeable au lithium, comprenant :
une électrode positive ;
une électrode négative ;
un séparateur interposé entre celles-ci ; et
une solution électrolytique,
dans laquelle l'électrode positive comprend un matériau actif d'électrode positive et un additif pour l'électrode positive,
dans laquelle l'additif pour l'électrode positive comprend du tellure,
dans laquelle la solution électrolytique comprend un sel de lithium, un solvant organique et un additif pour la solution électrolytique, et
dans laquelle l'additif pour la solution électrolytique comprend l'éther bis (2,2,2-trifluoroéthyle) ;
dans laquelle l'électrode positive comprend un collecteur de courant d'électrode positive et une couche de matériau actif d'électrode positive disposée sur au moins une surface du collecteur de courant d'électrode positive, et dans laquelle la couche de matériau actif d'électrode positive comprend le matériau actif d'électrode positive et du tellure ;
du tellure est contenu dans une quantité de 1 à 10 % en poids sur la base d'un total de 100 % en poids de la couche de matériau actif d'électrode positive ; et
de l'éther bis (2,2,2-trifluoroéthyle) est contenu dans une quantité de 1 à 20 % en volume sur la base d'un total de 100 % en volume de la solution électrolytique.

2. Batterie rechargeable au lithium selon la revendication 1, dans laquelle le matériau actif d'électrode positive inclut un ou plusieurs éléments sélectionnés dans le groupe constitué de soufre élémentaire et de composés de soufre.

3. Batterie rechargeable au lithium selon la revendication 1, dans laquelle le solvant organique comprend un éther cyclique et un éther acyclique.

4. Batterie rechargeable au lithium selon la revendication 3, dans laquelle l'éther cyclique comprend un ou plusieurs éléments sélectionnés dans le groupe constitué de furane, 2-méthylfurane, 3-méthylfurane, 2-éthylfurane, 2-propylfurane, 2-butylfurane, 2,3-diméthylfurane, 2,4-diméthylfurane, 2,5-diméthylfurane, pyrane, 2-méthylpyrane, 3-méthylpyrane, 4-méthylpyrane, benzofurane, 2-(2-nitrovinyl)furane, tétrahydrofurane, 2-méthyltétrahydrofurane, 2,5-diméthyltétrahydrofurane, 2,5-diméthoxy tétrahydrofurane, 2-éthoxy tétrahydrofurane, tétrahydropyrane, 1,2-diméthoxybenzène, 1,3-diméthoxybenzène et 1,4-diméthoxybenzène.

5. Batterie rechargeable au lithium selon la revendication 3, dans laquelle l'éther acyclique comprend un ou plusieurs éléments sélectionnés dans le groupe constitué d'éther diméthylique, éther diéthylique, éther dipropylique, éther méthyléthylique, éther méthylpropylique, éther éthylpropylique, diméthoxyéthane, diéthoxyéthane, éther diméthylique de diéthylène glycol, éther diéthylique de diéthylène glycol, éther méthyléthylique de diéthylène glycol, éther diméthylique de triéthylène glycol, éther diéthylique de triéthylène glycol, éther méthyléthylique de triéthylène glycol, éther diméthylique de tétraéthylène glycol, éther diéthylique de tétraéthylène glycol, éther méthyléthylique de tétraéthylène glycol, éther diméthylique de polyéthylène glycol, éther diéthylique de polyéthylène glycol et éther méthyléthylique de polyéthylène glycol.

6. Batterie rechargeable au lithium selon la revendication 1, dans laquelle le solvant organique comprend 2-méthylfurane et diméthoxyéthane.

7. Batterie rechargeable au lithium selon la revendication 1, dans laquelle le sel de lithium comprend un ou plusieurs éléments sélectionnés dans le groupe constitué de LiCl, LiBr, Lil, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, chloroborane de lithium, carboxylate aliphatique inférieur de lithium, borate de tétraphényle de lithium et imide de lithium.

8. Batterie rechargeable au lithium selon la revendication 1, dans laquelle la batterie rechargeable au lithium est une batterie au lithium-soufre.
